Europäisches Patentamt

European Patent Office

Office européen des brevets

(11) Veröffentlichungsnummer: **0 093 994**
**A2**

## EUROPÄISCHE PATENTANMELDUNG

(21) Anmeldenummer: **83104306.2**

(22) Anmeldetag: **02.05.83**

(51) Int. Cl.³: **A 23 K 1/02,** A 23 K 1/175,
A 23 K 1/00

(30) Priorität: **12.05.82 DE 3217749**

(43) Veröffentlichungstag der Anmeldung: **16.11.83**
**Patentblatt 83/46**

(84) Benannte Vertragsstaaten: **AT BE CH DE FR GB IT LI LU NL SE**

(71) Anmelder: **HOECHST AKTIENGESELLSCHAFT,**
**Postfach 80 03 20, D-6230 Frankfurt am Main 80 (DE)**

(72) Erfinder: **Pirig, Wolf-Dieter, Kastanienweg 17,**
**D-5350 Euskirchen (DE)**
Erfinder: **Dany, Franz-Josef, Dr., Heddinghovener**
**Strasse 47, D-5042 Erftstadt (DE)**
Erfinder: **Kandler, Joachim, Dr., Amselweg 10,**
**D-5042 Erftstadt (DE)**
Erfinder: **Buss, Hermann, Ludwig-Braun-Strasse 5,**
**D-6430 Bad Hersfeld (DE)**

(54) **Verfahren zur Herstellung von melassierten, mineralischen Mischfuttermitteln.**

(57) Zur Herstellung von melassierten, mineralischen Futtermitteln bildet man aus den pulverförmigen Futtermittelkomponenten in einem Behälter eine diffuse Wolke, die man durch einen Luftstrom in der Schwebe hält, und sprüht in diese Wolke Melasse in Tropfen ein, wobei die Tropfengröße der Melasse größer sein muß, als die der kleinsten Teilchen der pulverförmigen Futtermittelkomponenten.

0093994

HOECHST AKTIENGESELLSCHAFT                    HOE 82/H 016

Verfahren zur Herstellung von melassierten,
mineralischen Mischfuttermitteln

Die vorliegende Erfindung betrifft ein Verfahren zur Herstellung von melassierten, mineralischen Futtermittelmischungen; insbesondere von solchen, die rieselfähig und staubfrei sind und einen Wassergehalt von weniger als 10 Gew% aufweisen, durch Mischen der pulverförmigen Komponenten dieser Futtermittel mit Melasse.

Es ist bekannt, mineralische Futtermittel durch Mischen von Phosphaten des Natriums, Magnesiums und Calciums, von Viehsalz, Futterkalk, Vitaminen, Spurenelementen und Melasse in Zwangsmischern mit bewegten Mischorganen, z.B. Schaufeln, Paddeln oder Schnecken, herzustellen (DE-PS 13 01 705, DE-PS 20 00 791, DE-OS 29 35 171).

Nachteilig ist bei diesen so erhaltenen Mischungen, das sie einen Staubanteil von 20 Gew% und mehr aufweisen. Soll dieser Staub noch gebunden werden, müssen zusätzlich ca. 10-20 Gew% Wasser zur Granulation zugesetzt werden. Dieses Wasser muß jedoch nach erfolgter Granulation unter Einsatz von thermischer Energie wieder entfernt werden, da vom Gesetzgeber für diese Futtermittel max. 10 Gew% $H_2O$ vorgeschrieben sind. Außerdem nimmt die Vitaminstabilität bei höheren Wassergehalten erheblich ab. Nachteilig ist weiter, daß diese Produkte zum Verkleben neigen.

2       0093994

Aufgabe der vorliegenden Erfindung ist es daher, melassierte mineralische Futtermittelmischungen, die die genannten Nachteile nicht besitzen, aus den pulverförmigen Komponenten herzustellen, wenn diese einen hohen staubförmigen Anteil (Korngrößen unter 125 µm) aufweisen.

Überraschenderweise kann diese Aufgabe auf einfache Art gelöst werden, indem man in einem Behälter aus diesen pulverförmigen Futtermittelkomponenten eine diffuse Wolke bildet und durch einen Luftstrom in der Schwebe hält und in diese Wolke die Melasse in Tropfen einsprüht, wobei die Tropfengröße der Melasse größer sein muß, als die der kleinsten Teilchen der pulverförmigen Futtermittelkomponenten.

Anders als bei den bislang praktizierten Mischverfahren wird nach der erfindungsgemäßen Arbeitsweise nicht das pulverförmige Ausgangsmaterial mit Melasse überzogen und dadurch agglomeriert, sondern es wird umgekehrt, der verdüste Melassetropfen von dem feinteiligen Pulver von außen eingehüllt, wodurch rieselfähige, staubfreie und auch bei längerem Lagern nicht zusammenbackende Produkte erhalten werden, ohne daß zusätzlich Wasser eingesetzt werden muß und Nachbehandlungen erforderlich sind.

Als pulverförmige Komponenten eignen sich die für diese Zwecke allgemein bekannten Mischungen, die im wesentlichen aus sauren Phosphaten des Natriums, Calciums und Magnesiums, ferner aus Viehsalz, Futterkalk, Spurenelementen und Vitaminen bestehen.

Insbesondere eignen sich solche pulverförmigen Mischungen als Ausgangskomponenten, die einen Korndurchmesser von weniger als 4 mm, vorzugsweise im wesentlichen von weniger als 0,5 mm aufweisen. Dies stellt einen weiteren Vorteil dar, da diese Mischungen mit hohem Staubanteil besonders preiswert sind. Als Melasse eignen sich vor allem die handelsüblichen Produkte, wie Rübenzuckermelasse, Rohrzuckermelasse oder Vinasse, mit einem Wassergehalt von 20 bis 50 Gew%.

Besonders vorteilhaft führt man das erfindungsgemäße Verfahren kontinuierlich aus, indem man die diffuse Wolke aus den pulverförmigen Futtermittelkomponenten dadurch erzeugt, daß man letztere pneumatisch von oben in einen Sprühbehälter einträgt, in welchem diese Feststoffteilchen durch einen aufwärts gerichteten Luftstrom in einen turbulenten Schwebezustand versetzt und gehalten sowie gleichmäßig auf den Sprühraum verteilt werden. So wird in diesem Sprühraum eine Feststoffkonzentration von etwa 1 Volumen% und weniger erreicht. Im Vergleich dazu betragen die Feststoffkonzentrationen in Wirbelbetten 80 und mehr Volumen%.

Das Einsprühen der Melasse erfolgt am zweckmäßigsten durch Einstoffdüsen, welche vorzugsweise kranzförmig radial um den Sprühraum angeordnet sind.

Für die Durchführung dieses Verfahrens eignen sich daher ganz besonders Vorrichtungen, wie sie in der DE-PS 12 94 352 oder DE-OS 25 54 032 beschrieben sind.

Es hat sich auch als sehr empfehlenswert erwiesen, der Melasse vor oder bei dem Versprühen ein Tensid, vorzugsweise in einer Menge bis 0,3 Gew%, bezogen auf die Melasse, zuzusetzen.

Hierbei sind als Tenside beispielsweise geeignet Dialkylsufobernsteinsäure-Ester.

Die Menge der insgesamt eingesetzten Melasse sollte 25 Gew%, bezogen auf das Endprodukt, betragen. Ferner kann das erfindungsgemäße Verfahren wahlweise noch dadurch ausgestaltet werden, daß man dem Luftwirbelmischer eine Siebeinrichtung nachschaltet, den Feinanteil unter 0,5 mm aus dem Endprodukt abzieht und in den Prozeß zurückführt.

Die nachfolgenden Beispiele sollen die erfindungsgemäße Arbeitsweise näher erläutern.

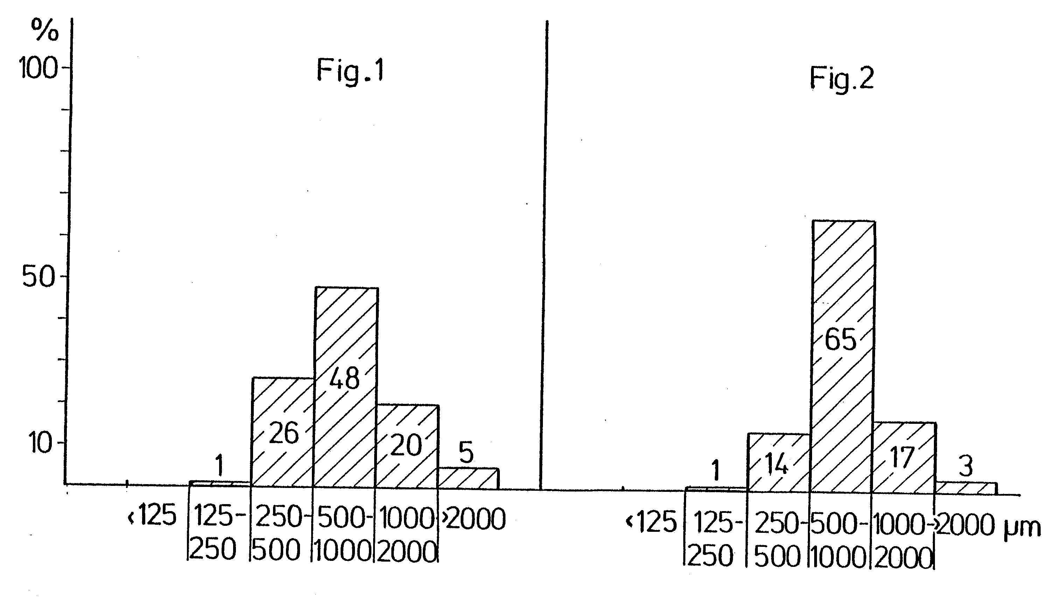

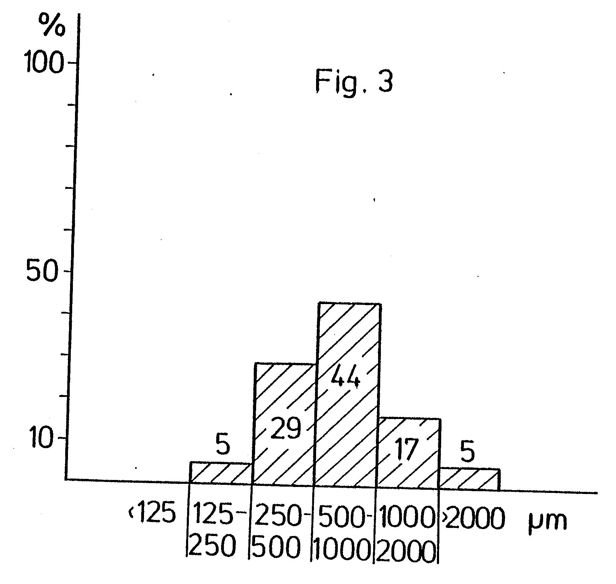

In den anschließenden Figuren 1-3 sind die Ergebnisse der Beispiele 1-3 anhand von Siebanalysen in Säulendiagrammen dargestellt. Die über den Figuren jeweils stehenden Ziffern entsprechen den Nummern der Beispiele.

Beispiel 1

Eine pulverige Mischung bestehend aus:

| | | |
|---|---|---|
| 300 kg | Calcium-Magnesium-Natrium-Phosphat (mit 9 Gew% Ca, 5 Gew% Mg, 12 Gew% Na und 17,5 Gew% P) | |
| 313 kg | Calciumcarbonat (Futterkalk) | |
| 175 kg | Natriumchlorid (Viehsalz) | |
| 62 kg | Dicalciumphosphat | |
| 20 kg | Magnesiumoxid | |
| 20 kg | Vitaminvormischung und | |
| 29 kg | Wasser | |

besaß ein Kornspektrum von: $<$0,125 mm ca. 35 %, $<$0,5 mm ca. 70 %, Rest ca. 30 % bis 4 mm.

Aus dieser Pulvermischung wurde in einer Vorrichtung wie sie in der DE-PS 1 294 352 beschrieben ist, pneumatisch eine diffuse Wolke erzeugt und diese Feststoffteilchen wurden durch Einsprühen von 123 kg einer 66,6 gewichts%-igen Melasse (Rest $H_2O$) in diese Wolke agglomeriert. Der Wassergehalt im Endprodukt betrug 6,7 Gew%. Dieses Produkt war rieselfähig, staubfrei und klumpte auch nach einer Lagerzeit von 4 Monaten nicht.

Beispiel 2

Eine pulverförmige Mischung bestehend aus:

615 kg   Calcium-Magnesium-Natrium-Phosphat
         ( mit 9 Gew% Ca, 5 Gew% Mg, 12 Gew% Na und 17,5
         Gew% P)
100 kg   Calciumcarbonat (Futterkalk)
 70 kg   Natriumchlorid (Viehsalz)
 20 kg   Dicalciumphosphat
 50 kg   Vitaminvormischung und
 32 kg   Wasser

besaß ein Kornspektrum von: $<0,125$ mm ca. 65 %, $<0,5$ mm ca. 90 %, Rest ca. 10 % bis 4 mm.

Diese Pulvermischung wurde wie in Beispiel 1 beschrieben mit 150 kg einer 66,6 gew%igen Melasse (Rest $H_2O$) agglomeriert. Der Wassergehalt im Endprodukt betrug 7,9 Gew%. Dieses Produkt war rieselfähig, staubfrei und klumpte auch nach einer Lagerzeit von 4 Monaten nicht.

Beispiel 3

Eine pulverförmige Mischung bestehend aus:

480 kg   Calcium-Magnesium-Natrium-Phosphat
         (mit 9 Gew% Ca, 5 Gew% Mg, 12 Gew% Na und 17,5
         Gew% P)
285 kg   Calciumcarbonat (Futterkalk)
 50 kg   Dicalciumphosphat
110 kg   Natriumchlorid (Viehsalz)
 40 kg   Vitaminvorrichtung und
 30 kg   Wasser

besaß ein Kornspektrum von: $<$ 0,125 mm ca. 50 %, $<$ 0,5 mm ca. 80 %, Rest ca. 20 % bis 4 mm.

Diese Pulvermischung wurde, wie in Beispiel 1 beschrieben, mit 115 kg einer 66,6 gew%igen Melasse (Rest $H_2O$) agglomeriert. Der Wassergehalt im Endprodukt betrug 6,16 Gew%. Dieses Produkt war rieselfähig, staubfrei und klumpte auch nach einer Lagerzeit von 4 Monaten nicht.

HOECHST AKTIENGESELLSCHAFT          HOE 82/H 016


Verfahren zur Herstellung von melassierten,
mineralischen Mischfuttermitteln


Patentansprüche:

1. Verfahren zur Herstellung von melassierten, mineralischen Futtermitteln aus deren pulverförmigen Komponenten und Melasse, dadurch gekennzeichnet, daß man
   aus den pulverförmigen Futtermittelkomponenten in einem Behälter eine diffuse Wolke bildet und durch einen Luftstrom in der Schwebe hält und in diese Wolke
   die Melasse in Tropfen einsprüht, wobei die Tropfengröße der Melasse größer sein muß, als die der kleinsten Teilchen der pulverförmigen Futtermittelkomponenten.

2. Verfahren nach Anspruch 1, dadurch gekennzeichnet, daß
   man als pulverförmige Komponenten Mischungen einsetzt,
   die im wesentlichen aus sauren Phosphaten des Natriums,
   Calciums und Magnesiums, ferner aus Viehsalz, Futterkalk, Spurenelementen und Vitaminen bestehen.

3. Verfahren nach Anspruch 1 oder 2, dadurch gekennzeichnet, daß man pulverförmige Komponenten einsetzt, die
   einen Korndurchmesser von weniger als 4 mm aufweisen.

4. Verfahren nach Anspruch 3, dadurch gekennzeichnet, daß
   man pulverförmige Komponenten einsetzt, die im wesentlichen einen Korndurchmesser von weniger als 0,5 mm
   aufweisen.

5. Verfahren nach einem der Ansprüche 1 bis 4, <u>dadurch</u> <u>gekennzeichnet</u>, daß man eine Melasse einsetzt, die einen Wassergehalt von 20 bis 50 Gew% aufweist.

6. Verfahren nach einem der Ansprüche 1 bis 5, <u>dadurch</u> <u>gekennzeichnet</u>, daß man die diffuse Wolke erzeugt, indem man die pulverförmigen Futtermittelkomponenten von oben pneumatisch in einen Sprühraum kontinuierlich einträgt, in welchem diese Feststoffteilchen durch einen aufwärts gerichteten Luftstrom in einen turbulenten Schwebezustand versetzt und gehalten sowie gleichmäßig auf den Sprühraum verteilt werden, und daß man die Melasse radial von außen in die entstandene Wolke kontinuierlich einsprüht.

7. Verfahren nach einem der Ansprüche 1 bis 6, <u>dadurch</u> <u>gekennzeichnet</u>, daß man der Melasse vor oder bei dem Versprühen ein Tensid zusetzt.

8. Verfahren nach Anspruch 7, <u>dadurch gekennzeichnet</u>, daß man das Tensid in einer Menge bis 0,3 Gew%, bezogen auf die Melasse, zusetzt.

9. Verfahren nach einem der Ansprüche 1 bis 8, <u>dadurch</u> <u>gekennzeichnet</u>, daß man die Melasse insgesamt in einer Menge bis 25 Gew%, bezogen auf das Endprodukt einsetzt.

10. Verfahren nach Anspruch 8 oder 9, <u>dadurch gekennzeich-</u> <u>net</u>, daß man als Tensid Dialkylsulfobernsteinsäure-Ester einsetzt.

Fig.1

Fig.2

Fig. 3